Europäisches Patentamt

European Patent Office

Office européen des brevets

(11) Publication number: **0 254 747 B1**

# EUROPEAN PATENT SPECIFICATION

(45) Date of publication of patent specification: **16.09.92**   (51) Int. Cl.5: **H01S 3/03**

(21) Application number: **87901111.2**

(22) Date of filing: **28.01.87**

(86) International application number:
**PCT/JP87/00060**

(87) International publication number:
**WO 87/04869 (13.08.87 87/18)**

(54) COAXIAL CO2 LASER UTILIZING HIGH-FREQUENCY EXCITATION.

(30) Priority: **29.01.86 JP 15595/86**

(43) Date of publication of application:
**03.02.88 Bulletin 88/05**

(45) Publication of the grant of the patent:
**16.09.92 Bulletin 92/38**

(84) Designated Contracting States:
**DE FR GB**

(56) References cited:
| JP-A- 603 170 | JP-A-56 138 976 |
| JP-A-61 142 783 | JP-A-61 280 689 |
| JP-A-61 294 882 | JP-A-61 295 681 |
| US-A- 3 386 043 | US-A- 3 427 567 |

**No relevant documents have been disclosed.**

(73) Proprietor: **FANUC LTD.**
**3580, Shibokusa Aza-Komanba, Oshino-mura**
**Minamitsuru-gun, Yamanashi 401-05(JP)**

(72) Inventor: **KARUBE, Norio**
**1-9-28, Minamitsukushino**
**Machida-shi Tokyo 194(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a coaxial type $CO_2$ laser which is adapted to be excited upon application of high frequency.

A high frequency discharge excited $CO_2$ laser may have the following features:

i) metallic electrodes and carbon dioxide gas ($CO_2$) are not in contact with each other, so that no chemical reaction takes place therebetween;

ii) being of capacitive ballast type, the laser has a high energy efficiency; and

iii) since transverse electric discharge requires relatively low voltage, employment of a power source composed of a solid state device will suffice, so that the size of the equipment can be reduced.

For these reasons, a high frequency discharge excited $CO_2$ laser can comprise an oscillator which is

i) small in size, and

ii) high in efficiency.

However, transverse electric discharge is generally used in the case of high frequency discharge excited lasers and the resulting gain distribution over the cross section of the laser tube does not have circular symmetry. Accordingly, a high frequency discharge excited laser is used in combination with a transverse gas flow whose gain distribution similarly is not circularly symmetrical, wherefore a good beam mode is not to be expected. For this reason, a DC discharge excited coaxial type $CO_2$ laser is used exclusively in applications where good beam mode is a requirement. However, in respects other than beam mode, the DC discharge excited coaxial type laser is inferior to a high frequency discharge excited type laser.

There have already been disclosed in the prior art high frequency discharge excited coaxial type $CO_2$ lasers wherein two helical electrical conductors are affixed to an outer periphery of the laser tube. Thus see US-A-3427567, JP-A-56-138976 and JP-A-60-3170, the first of which discloses a laser according to the precharacterising part of the attached claim 1.

It is an object of the present invention to provide a high frequency discharge excited coaxial type $CO_2$ laser, which at least partially overcomes the disadvantages of the prior art, and is equipped with both the advantages of a high frequency discharge excited type laser and those of a coaxial type laser, and therefore is able to produce a good beam mode.

According to the present invention there is provided a high frequency discharge excited coaxial type $CO_2$ laser comprising: a laser tube composed of a dielectric material, in which a $CO_2$ laser gas is passed in an axial direction through the tube; two helical electrical conductors affixed to an outer periphery of the laser tube, having the same pitch as each other and being films of conductive material; and a high frequency power source operable to apply a high frequency voltage between the two helical electrical conductors, characterised in that said conductors each have a thickness which is small enough to prevent them peeling off the laser tube despite any difference in thermal characteristics between the conductors on one hand and the laser tube on the other hand, and in that the thickness D of the laser tube is given by the expression $D = V\epsilon\omega/2I$, wherein when the laser is operational V is the discharge sustaining voltage, $\epsilon$ is the dielectric constant of the laser tube, $\omega$ is the frequency of the high frequency power source, and I is the current density.

In embodiments of the present invention, the two helical electrical conductors are affixed to the periphery of the laser tube composed of a dielectric material, and the high frequency voltage is applied between the two helical electrical conductors by means of the high frequency power source to cause electrical discharge between the two helical electrical conductors in the laser tube. The $CO_2$ gas stream flowing in the laser tube possesses circular symmetry with respect to the axis of the laser tube, and the electric discharge occurs in a manner that it traces a helical locus gradually proceeding along, and rotating about the axis of, the laser tube because of the provision of the helical electrical conductors. Hence the mode of the electrical discharge becomes, as a whole, circularly symmetrical and it is possible to obtain the TEMoo mode which is proper or appropriate to the coaxial type laser, without sacrificing the advantages of the excited high frequency discharge such as no chemical reaction taking place between the electrodes and the $CO_2$ gas, high energy efficiency, and possible utilization of a power source composed of a solid state device. As a result a $CO_2$ laser for cutting can be made smaller in size and higher in efficiency.

## BRIEF DESCRIPTION OF THE DRAWINGS

Fig. 1 is a view of part of a high frequency discharge excited coaxial type laser according to an embodiment of the present invention; and

Fig. 2 is a cross-sectional view taken along line X - X of Fig. 1.

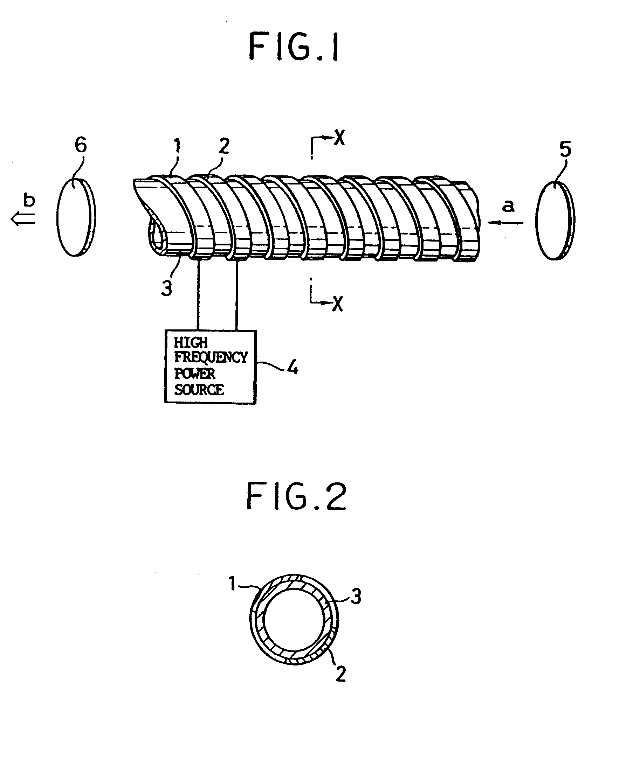

Figs. 1 and 2 show part of a high frequency discharge excited coaxial type laser according to an embodiment of the present invention, wherein reference numeral 3 designates a laser tube in the form of a dielectric pipe having a circular cross section as shown in Fig. 2. The $CO_2$ laser gas is passed axially in the laser tube 3. Applied helically on the periphery of the laser tube are two stripes of conductive paint such as aquadag®, which form helical filmy electric conductors 1, 2 having the same pitch and a phase difference of 180°; a high frequency voltage from a high frequency power source 4 being applied between the two conductors 1, 2. Reference numerals 5 and 6 refer to a total reflection mirror and an output coupling mirror, respectively.

In the laser thus constructed, the $CO_2$ laser gas is passed in the laser tube 3 in the direction indicated by an arrow a in Fig. 1, and the high frequency voltage is applied between the two helical conductors 1 and 2 by the high frequency power source 4, whereby in the laser tube 3 electric discharge occurs between the diametrically opposite faces of the conductors 1 and 2 which oppose each other across the dielectric layer of the laser tube 3. This electric discharge develops in a manner that it traces a helical locus gradually proceeding along and rotating around the axis of the tube, because of the helical arrangement of the two conductors 1, 2. Therefore, the electric discharge occurs, as a whole, in circular symmetry with respect to the axis of the tube. The $CO_2$ gas stream, the distribution of which affects the gain distribution and hence the electric discharge mode formation, flows along the axis of the laser tube 3 whose cross section is circular so that, cross-sectionally viewed, the gas stream roughly becomes circularly symmetrical. Consequently, the laser gain becomes circularly symmetrical to a great extent and therefore the laser beam b, which is emitted from the laser tube 3 via the output coupling mirror 6, assumes a circular mode, and as a result, the $TEM_{oo}$ mode proper or appropriate to a coaxial type laser is obtained.

In view of dielectric breakdown strength, appropriate dielectric materials for the laser tube 3 include barium titanate, quartz, alumina, Mylar® and polyimide. A ceramic tube made of these materials can constitute an advantageous laser tube 3.

Let D be the thickness of the laser tube 3, V the discharge sustaining voltage, $\epsilon$ the dielectric constant, $\omega$ the frequency of the high frequency power source, and I the current density. Then the voltage drop through the two dielectric layers of the laser tube 3 is given by $Id/\epsilon\omega$. In order to secure stable electric discharge, the value $Id/\epsilon\omega$ should be equal to the discharge sustaining voltage V of the laser plasma, and hence the appropriate thickness D is given as follows:

$$D = V\epsilon\omega/2I$$

Therefore, by using a dielectric tube of larger dielectric constant $\omega$ and/or increasing the frequency of the high frequency power source, it becomes possible to make the thickness D of the dielectric tube greater, so that if the dielectric tube is to be made of a ceramic no pinholes or the like are formed in the course of manufacturing, whereby stable discharge is obtained and the dielectric tube by itself can provide the laser tube with its required mechanical strength and hence the conductors 1,2 can be made thinner.

Thus, if the conductors 1, 2 are formed of thin film, the conductors 1, 2 do not peel off the dielectric body 3, even if the conductors 1, 2 differ substantially from the dielectric body 3 in thermal characteristics such as thermal expansion coefficient, so that it is possible to select a material for the dielectric body 3 purely from the viewpoint of electrical properties and regardless of the thermal properties.

Incidentally, in the above embodiment, the filmy conductors 1, 2 are formed by applying a conductive paint, but the filmy conductors 1, 2 may be formed of copper or gold applied by fused metal injection. Or methods like plating and evaporation may be used.

## Claims

1. A high frequency discharge excited coaxial type $CO_2$ laser comprising: a laser tube (3) composed of a dielectric material, in which a $CO_2$ laser gas is passed in an axial direction through the tube (3); two helical electrical conductors (1,2) affixed to an outer periphery of the laser tube (3), having the same pitch as each other and being films of conductive material; and a high frequency power source (4) operable to apply a high frequency voltage between the two helical electrical conductors (1,2), characterised in that said conductors (1,2) each have a thickness which is small enough to prevent them peeling off the laser tube (3) despite any difference in thermal characteristics between the conductors (1,2) on one hand and the laser tube (3) on the other hand, and in that the thickness D of the laser tube (3) is given by the expression $D = V\epsilon\omega/2I$, wherein when the laser is operational V is the discharge sustaining voltage, $\epsilon$ is the dielectric constant of the laser tube (3), $\omega$ is the frequency of the high frequency power source (4), and I is the current density.

2. A high frequency discharge excited coaxial type $CO_2$ laser as claimed in claim 1, wherein said two helical electrical conductors (1,2) are arranged such that a phase difference of 180° exists therebetween.

3. A high frequency discharge excited coaxial

type $CO_2$ laser as claimed in claim 1 or 2, wherein said laser tube (3) is circular in cross section.

4. A high frequency discharge excited coaxial type $CO_2$ laser as claimed in any preceding claim, wherein said electrical conductors (1,2) are conductive paint applied as films to the outer periphery of said laser tube (3).

5. A high frequency discharge excited coaxial type $CO_2$ laser as claimed in any preceding claim, wherein the two conductors (1,2) have diametrically opposite faces opposing each other, and wherein electric discharge occurs between the diametrically opposite faces when the laser is in use.

6. A high frequency discharge excited coaxial type $CO_2$ laser as claimed in any preceding claim, wherein said dielectric material comprises either barium titanate, quartz, alumina, or polyimide.

7. A high frequency discharge excited coaxial type $CO_2$ laser as claimed in any preceding claim, wherein said laser tube (3) has a thickness which is large enough to prevent pin holes from being formed during manufacturing and to provide said laser tube (3) with sufficient mechanical strength.

**Patentansprüche**

1. Durch Hochfrequenzentladung angeregter, koaxialer $CO_2$-Laser umfassend: ein Laserrohr (3) aus einem dielektrischen Material, wobei ein $CO_2$-Lasergas in axialer Richtung durch das Rohr (3) geleitet wird, zwei wendelförmige elektrische Leiter (1,2), die an der äußeren Peripherie des Laserrohrs (3) befestigt sind und dieselbe Gangart haben sowie aus Filmen von leitendem Material bestehen, und eine Hochfrequenzkraftquelle (4), die betreibbar ist für das Anlegen einer hochfrequenten Spannung zwischen den beiden wendelförmigen elektrischen Leitern (1,2), dadurch **gekennzeichnet**, daß die Leiter (1,2) jeweils eine Dicke aufweisen, die dünn genug ist, um ein Ablösen derselben vom Laserrohr (3) ungeachtet einer jeden Differenz in den thermischen Charakteristiken zwischen den Leitern (1,2) einerseits und dem Laserrohr (3) andererseits zu vermeiden, und daß die Dicke D des Laserrohrs (3) der Beziehung $D = V\epsilon\omega/2I$ entspricht, wobei im Falle des Laser-Betriebs V der Entladespannung entspricht, $\epsilon$ die dielektrische Konstante

des Laserrohrs (3) ist, $\omega$ die Frequenz der Hochfrequenzkraftquelle bedeutet und I die Stromdichte wiedergibt.

2. Durch Hochfrequenzladung angeregter, koaxialer $CO_2$-Laser gemäß Anspruch 1, wobei die beiden wendelförmigen elektrischen Leiter (1,2) so angeordnet sind, daß zwischen ihnen eine Phasendifferenz von 180° besteht.

3. Durch Hochfrequenzentladung angeregter, koaxialer $CO_2$-Laser gemäß Anspruch 1 oder 2, wobei das Laserrohr (3) Kreisquerschnitt aufweist.

4. Durch Hochfrequenzentladung angeregter, koaxialer $CO_2$-Laser gemäß einem jeden der vorangehenden Ansprüche, wobei die elektrischen Leiter (1,2) leitende Anstriche sind, die als Filme auf der äußeren Peripherie des Laserrohrs (3) angebracht sind.

5. Durch Hochfrequenzentladuug angeregter, koaxialer $CO_2$-Laser gemäß einem jeden der vorangehenden Ansprüche, wobei die beiden Leiter (1,2) diametral entgegengesetzte, einander gegenüberliegende Vorderflächen aufweisen und die elektrische Entladung zwischen den diametral entgegengesetzten Flächen bei Betrieb des Lasers erfolgt.

6. Durch Hochfrequenzentladung angeregter, koaxialer $CO_2$-Laser gemäß einem jeden der vorangehenden Ansprüche, wobei das dielektrische Material entweder Bariumtitanat, Quarz, Aluminiumoxid oder Polyimid aufweist.

7. Durch Hochfrequenzentladung angeregter, koaxialer $CO_2$-Laser gemäß einem jeden der vorangehenden Ansprüche, wobei das Laserrohr (3) eine solche Dicke hat, die groß genug ist, um während der Herstellung die Bildung von kleinen Löchern zu vermeiden und um dem Rohr (3) eine hinreichende mechanische Festigkeit zu verleihen.

**Revendications**

1. Laser coaxial à $CO_2$ à haute fréquence d'excitation comprenant un tube laser (3) constitué d'une matière diélectrique, dans lequel un gaz laser $CO_2$ est envoyé dans la direction axiale à travers le tube (3) ; deux conducteurs électriques (1, 2) hélicoïdaux fixés à la périphérie externe du tube laser (3), ayant le même pas mutuel et constitués de films de matière conductrice ; et une source d'énergie haute fréquence (4) susceptible d'appliquer une tension de haute fréquence entre les deux conducteurs électriques hélicoïdaux (1, 2), caractérisé en ce que lesdits conducteurs (1, 2) ont chacun une épaisseur qui est assez faible pour les empêcher de se détacher du tube laser (3) en dépit d'une différence quelconque de caractéristiques thermiques entre les conducteurs (1, 2) d'une part, et le tube laser (3), d'autre part, et en ce que l'épaisseur D du tube laser (3) est donnée par l'expression $D = V \epsilon\omega/2I$, dans laquelle, lorsque le laser est opérationnel, V est la tension de soutien de la décharge, $\epsilon$ est la constante diélectrique du tube laser (3), $\omega$ est le fréquence de la source d'énergie haute fréquence (4) et I est la densité du courant.

2. Laser coaxial à $CO_2$ à haute fréquence d'excitation selon la revendication 1, dans lequel les deux conducteurs électriques hélicoïdaux (1, 2) précités sont agencés en sorte qu'une différence de phase de 180° existe entre eux.

3. Laser coaxial à $CO_2$ à haute fréquence d'excitation selon la revendication 1 ou 2, dans lequel le tube laser (3) précité est circulaire en coupe transversale.

4. Laser coaxial à $CO_2$ à haute fréquence d'excitation selon l'une quelconque des revendications précédentes, dans lequel les conducteurs électriques (1, 2) précités sont constitués d'une peinture conductrice appliquée sous formes de films à la périphérie externe du tube laser (3) précité.

5. Laser coaxial à $CO_2$ à haute fréquence d'excitation selon l'une quelconque des revendications précédentes, dans lequel les deux conducteurs (1, 2) ont des faces diamétralement opposées en regard l'une de l'autre et dans lequel une décharge électrique se produit entre les faces diamétralement opposées lorsque le laser est en service.

6. Laser coaxial à $CO_2$ à haute fréquence d'excitation selon l'une quelconque des revendications précédentes, dans lequel la matière diélectrique précitée est constituée de titanate de baryum, de quartz, d'alumine ou de polyimide.

7. Laser coaxial à $CO_2$ à haute fréquence d'excitation selon l'une quelconque des revendications précédentes, dans lequel le tube laser (3) précité a une épaisseur qui est assez importante pour empêcher la formation de trous d'épingle au cours de la fabrication et assurer au tube laser (3) précité une résistance méca-

nique suffisante.

# FIG.1

HIGH FREQUENCY POWER SOURCE

# FIG.2